Europäisches Patentamt

European Patent Office

Office européen des brevets

(11) Veröffentlichungsnummer: **0 443 336 A1**

# (12) EUROPÄISCHE PATENTANMELDUNG

(21) Anmeldenummer: **91100841.5**

(22) Anmeldetag: **23.01.91**

(51) Int. Cl.⁵: **A61L 2/24, G01K 1/14**

(30) Priorität: **22.02.90 DE 9002128 U**

(43) Veröffentlichungstag der Anmeldung:
**28.08.91 Patentblatt 91/35**

(84) Benannte Vertragsstaaten:
**AT CH DE DK LI**

(71) Anmelder: **MMM MÜNCHENER MEDIZIN
MECHANIK GMBH
Halmstrasse 6**

**W-8000 München 70(DE)**

(72) Erfinder: **Kammermeier, Bernhard
Thalkirchnerstrasse 188
W-8000 München 70(DE)**

(74) Vertreter: **Patentanwälte Grünecker,
Kinkeldey, Stockmair & Partner
Maximilianstrasse 58
W-8000 München 22(DE)**

(54) Führungselement für Kabel von Messsonde in einer Kammer zur Behandlung von Gut.

(57) Die vorliegende Erfindung betrifft eine Vorrichtung mit Kammer zur Behandlung von eingebrachtem Gut, wobei die Kammer (3) eine vertikale Öffnung aufweist, in die mindestens ein das zu behandelnde Gut, insbesondere Flüssigkeit enthaltender Behälter, tragendes Gestell (5) einbringbar ist, wobei in die Kammer (3) wenigstens eine an einem Kabel (11) angebrachte Meßsonde (9) zum Einbringen in das zu behandelnde Gut eingeführt ist, und das Kabel (11) im oberen Bereich der Kammer (3) aus dieser herausgeführt ist. Die Vorrichtung zeichnet sich dadurch aus, daß das Kabel (11) im Inneren der Kammer (3) an einem Führungselement (13) angebracht ist, das seinerseits im wesentlichen in horizontaler Richtung entlang einer Seitenwand (23) bewegbar geführt ist. In einer bevorzugten Ausführungsform bewegt sich das Führungselement (13) auf einer Schiene (21), wobei es entweder gleitet oder rollt.

FIG.1

Die vorliegende Erfindung betrifft eine Vorrichtung mit einer eine vertikale Öffnung aufweisenden Kammer, in die mindestens ein das zu behandelnde Gut tragendes Gestell einbringbar ist, nach dem Oberbegriff des Anspruchs 1.

Herkömmlicherweise wird das zu behandelnde Gut, insbesondere Sterilisiergut, das beispielsweise aus eine Flüssigkeit enthaltenden Behältern besteht, in eine Kammer eingebracht, um dort sterilisiert bzw. behandelt zu werden. Zur Erleichterung des Einbringens wird das Gut beispielsweise auf fahrbare Gestelle in mehreren Ebenen aufgestellt, und die Gestelle werden in die Kammer zum Sterilisieren eingebracht bzw. eingefahren. Der Behandlungsvorgang muß gemäß bestimmter Vorschriften überwacht werden bzw. es muß überprüft werden können, ob das Sterilisiergut auch tatsächlich sterilisiert wurde.

Um den Sterilisiervorgang während seiner gesamten Dauer zu überwachen, wird wenigstens eine Meßsonde, bevorzugt mehrere Meßsonden, in das Gut eingebracht, wobei die Meßsonden beispielsweise als Temperaturfühler ausgebildet sind. Die gemessenen Werte werden über ein Kabel pro Meßsonde einer Meßvorrichtung zugeführt.

Derartige Vorrichtungen eignen sich nicht nur für die überwachung von Sterilisiergut, sondern generell auch für Vorgänge zur überwachung von Prozessen, beispielsweise dem Backen von Brot oder dgl.

Nachteilig ist beim Stand der Technik jedoch, daß die Kabel von der Einführstelle bis zum Meßpunkt frei in der Kammer verlaufen, wodurch beim Ein- bzw. Ausbringen des Gutes die Gefahr besteht, daß sich die Kabel verhängen bzw. verklemmen, was zu deren Beschädigung führen kann.

Der vorliegenden Erfindung liegt deshalb die Aufgabe zugrunde, eine Vorrichtung nach dem Oberbegriff des Anspruchs 1 zu schaffen, bei der zuverlässig eine Beschädigung der Kabel verhindert wird.

Diese Aufgabe wird dadurch gelöst, daß das oder die Kabel im Innern der Kammer an einem bzw. jeweils einem Führungselement angebracht ist bzw. sind, das seinerseits im wesentlichen in horizontaler Richtung entlang einer Seitenwand bewegbar geführt ist.

Dadurch wird erreicht, daß das bzw. die Kabel in der Kammer so geführt sind, daß ein Beschädigen beim Einfahren bzw. Herausfahren des Sterilisiergutes vermieden wird, da die Kabel entsprechend beweglich geführt sind.

Weiterhin ergibt sich der Vorteil einer guten und erleichterten Handhabung der Kabel, wobei insbesondere ein geordnetes Bewegen beim Hinein- und Herausfahren des zu behandelnden Gutes, in denen die Meßsonden sich befinden, erreicht wird.

Weitere Vorteile der vorliegenden Erfindung ergeben sich aus den Unteransprüchen.

Ein sicheres Führen des Führungselements und damit des Kabels wird dadurch erreicht, daß das Führungselement sich auf einer Schiene bewegt.

Ein besonders leichtes Bewegen des Führungselements wird dadurch erreicht, daß es auf der Schiene gleitet oder rollt, wodurch insbesondere beim Einführen des Sterilisierguts auf dem Gestell das Kabel der sich bewegenden Meßsonde ensprechend nachgeführt werden kann.

Ein einfacher Aufbau des Führungselements wird dadurch erreicht, daß das Führungselement aus einem Räderpaar und einem das Kabel fixierenden Halteblock gebildet ist. Hierbei ist vorteilhafterweise in dem Halteblock eine Öffnung ausgebildet, durch die sich das Kabel erstreckt und in der es eingeklemmt ist. Damit wird ein fester Lagepunkt des Kabels erreicht, wodurch eine entsprechende Länge des Kabels zwischen Meßsonde und Haltepunkt festgelegt ist bzw. vorher eingestellt werden kann.

Um eine gute Gleitbeweglichkeit des Führungelements zu erreichen, ist der Halteblock einerseits und das Räderpaar andererseits aus Polytetrafluorethylen gebildet, wobei die Drehachse, die die Räder mit dem Halteblock verbindet, aus Edelstahl gebildet ist. Es können jedoch auch noch andere geeignete Werkstoffpaarungen gewählt werden, die hitzebeständig und selbstschmierend sind.

Weiterhin kann eine einfache Bewegungsmöglichkeit des Kabels und des Führungselements dadurch erreicht werden, daß der Halteblock zwischen dem Räderpaar bzw. den Rädern angeordnet ist und daß das Kabel sich durch eine Längsöffnung der Schiene in vertikaler Richtung erstreckt.

Ein besonderer Vorteil ergibt sich dadurch, daß die Räder eine sich nach außen verjüngende Rollfläche aufweisen und die Schiene hierzu komplementäre Laufflächen aufweist, wodurch erreicht wird, daß das Führungselement mittig geführt wird bzw. sich selbst zentriert und dadurch ein seitliches Anschlagen es Halteblocks weitestgehend vermeiden werden kann. Dies fürhrt vorteilhafterweise zu einer besonders guten Beweglichkeit des Führungselements. Selbst wenn jedoch der Halteblock gegen die Kante der Lauffläche stößt, ergeben sich noch keine besonderen Bewegungsbeeinträchtigungen, da aufgrund der Werkstoffwahl zwischen Halteblock und Schiene nur sehr geringer Reibungswiderstand besteht.

Da die Einführstelle des oder der Kabel in die Kammer in der Regel nur an einer bestimmten Stelle erfolgt bzw. das oder die Kabel dort herausgeführt wird bzw. werden, wird jedes Kabel zwischen dem Führungselement und dem Herausführort vorteilhafterweise gestützt. Dies kann bespielsweise dadurch erfolgen, daß das Kabel an bewegbaren Halteelementen aufgehängt ist.

Bevorzugt wird das Kabel jedoch über eine Stützebene, insbesondere in Form eines Gleitblechs geführt und dort gestützt. Dies hat den Vorteil, daß ein in horizontaler Richtung definierter Kabelverlauf erreicht wird. Hierzu verläuft die Stützebene im wesentlichen horizontal.

Da es nicht notwendig ist, die Stützebene über den gesamten horizontalen Bereich der Kammer auszudehnen, sofern die Schiene nur an einer Seite angeordnet ist, überdeckt diese nur den für die Kabel notwendigen Bereich. Um zu verhindern, daß die Kabel trotzdem über die Stützebene hinaus gelangen und evtl. nach unten in die Kammer weiterhin abfallen, sind vorteilhafterweise an den "offenen" Rändern, d.h. an den der Schiene abge-wandten Seitenrändern der Stützebene Anschlag-elemente vorgesehen. .

Zum weiteren leichten Führen des bzw. der Kabel und Überführen von einer im wesentlichen horizontalen Lage in eine im wesentlichen vertikale Lage weist die erfindungsgemäße Vorrichtung ein Kabelstütz- und Umlenkelement auf. Dieses Kabelstütz- und Umlenkelement kann vorteilhafterweise besonders einfach dadurch ausgestaltet sein, daß es als zur Schiene parallel verlaufendes Rohr ausgebildet ist.

Um den Reibungswiderstand zwischen dem oder den Kabeln und der Stützebene weiter zu verringern, sind vorteilhafterweise zwischen dem Herausführort und dem Führungselement weitere Stützelemente auf das Kabel aufgebracht. Diese Stützelemente können vorteilhafterweise aus Polytetrafluorethylen-Blöcken gebildet sein, die durch Spannhülsen an dem Kabel fixiert sind. Dadurch wird wieder ein besonders gutes Gleiten der Stützelemente auf der Stützebene erreicht.

Vorteilhafterweise sind die Stützelemente, um ein sicheres Abstützen des Kabels zu gewährleisten, in regelmäßigen Abständen angeordnet.

Die Vorrichtung weist im unteren Bereich der Kammer an wenigstens der Seitenwand, die den Führungselementen benachbart ist, Aufnahmeelemente zur Aufnahme der Meßsonden auf, so daß diese in Ruhestellung sicher verstaut werden können und eine Beschädigungsgefahr der Kabel und Sonden vermieden wird. Das Aufnahmeelement kann beispielsweise als U-förmige Schiene ausgebildet werden, in die vorspringende in vertikaler Richtung angeordnete Rollen eingesetzt sind, so daß die fahrbaren Gestelle, auf denen sich das zu behandelnde Gut befindet, hierdurch an einem Aufprallen an den Seitenwänden der Kammer gehindert werden, so daß das Aufnahmeelement als Abweiser dient. Bevorzugt ist an jeder der Längsseitenwände ein Abweiser vorgesehen.

Vorteilhafterweise sind in dem Aufnahmeelement, das sich unterhalb der Schiene befindet, Löcher bzw. Öffnungen ausgebildet, in denen die Sonden in Ruhestellung eingesteckt sind. Dadurch wird vorteilhafterweise erreicht, daß die empfindlichen Sonden vor einer Beschädigung geschützt sind.

Die Hänglänge des Kabels kann unter Umständen nicht ausreichen, um einen zum Führungselement genau entgegengesetzten Punkt zu erreichen. Aus diesem Grund muß das Kabel länger sein als die Hänglänge, wodurch jedoch ein paralleles Hängen zur Seitenwand der Kammer unter Umständen nicht mehr sichergestellt ist, so daß ein Ein- und Ausführen des Gestells das Kabel ergreifen und dadurch beschädigen könnte bzw. das Kabel könnte sich am Gestell verklemmen, so daß ein entsprechendes Herausbewegen oder Hineinbewegen des Gestells behindert wird. Aus diesem Grund ist vorteilhafterweise ein Klemmbügel vorgesehen, der dem Kabel eine in seiner Größe veränderliche Schlaufe verleiht.

Besonders vorteilhaft wird das Gut vor dem Einführen in die Kammer mit den jeweiligen Meßsonden versehen und dann diese Anordnung komplett in die Kammer eingeführt. Hierbei tritt jedoch das Problem auf, daß die Kabel zwischen Führungselement und Meßsonde besonders bzw. entsprechend lang gewählt werden müssen, um das entsprechend von der Öffnung der Kammer entfernte Gut zu erreichen. Vorteilhafterweise wird deshalb eine Schienenverlängerung vorgesehen, die erlaubt, die Führungselemente aus der Kammer heraus zu bewegen.

In einer besonders einfachen Ausführungsform ist die Schienenverlängerung als schwenkbare Schiene ausgebildet. In Ruhestellung kann sich da-bei die schwenkbare Schienenverlängerung vorteil-hafterweise im wesentlichen vertikal erstrecken.

Um eine einfache Verbindung zwischen Schienenverlängerung und Schiene zu bilden, weist die Schienenverlängerung an ihrem Schwenkende in den Seitenflächen der beiden Schienenteile jeweils ein Langloch auf, durch das sich ein Bolzen erstreckt, wobei der Bolzen unterhalb der Lauffläche der Schiene in jeweils eine vertikale Seitenfläche von dieser festgelegt ist. Um einen stufenartigen Übergang zwischen Schiene und Schienenverlängerung zu vermeiden, weist die Schienenverlängerung im Bereich des Langlochs keine Lauffläche auf.

Weiterhin sind die beiden Schienenteile an dem dem Langloch gegenüberliegenden Ende miteinander verbunden, wodurch einerseits ein Herausfallen der Führungselemente vermieden wird und andererseits eine ausreichende Stabilität der Schienenverlängerung erreicht wird.

Alternativ zur schwenkbar angelenkten Schienenverlängerung kann diese auch teleskopartig ausgebildet sein, wobei sie dann parallel zur Schiene und der Bewegungsrichtung der Führungselemente aus der Kammer herausgezogen und in diese wieder hineingeschoben werden kann.

Weitere Einzelheiten, Merkmale und Vorteile der vorliegenden Erfindung ergeben sich aus der nachfolgenden Beschreibung unter Bezugnahme auf die Zeichnung. Darin zeigt:

Fig. 1     eine Seitenschnittansicht einer erfindungsgegemäßen Vorrichtung, wobei der untere Bereich der Kammer nicht dargestellt ist;

Fig. 2     eine horizontale Schnittdraufsicht auf den obersten Bereichs der Vorrichtung;

Fig. 3     eine Schnittansicht von vorne in die Kammer gemäß der Linie III-III von Fig. 2;

Fig. 4     eine Seitenansicht auf aneinanderliegende Führungselemente der Kabel;

Fig. 5     eine Detaildarstellung der Kabelführung mit einem auf einer Schiene gelagerten Führungselement;

Fig. 6     eine Schnittansicht gemäß der Linie VI-VI und Fig. 5;

Fig. 7     einen prinzipiellen Aufbau einer Schienenverlängerung und deren Anlenkung an die Schiene; und

Fig. 8     eine Prinzipdarstellung der Schienenverlängerung im eingeklappten Zustand gemäß Fig. 7.

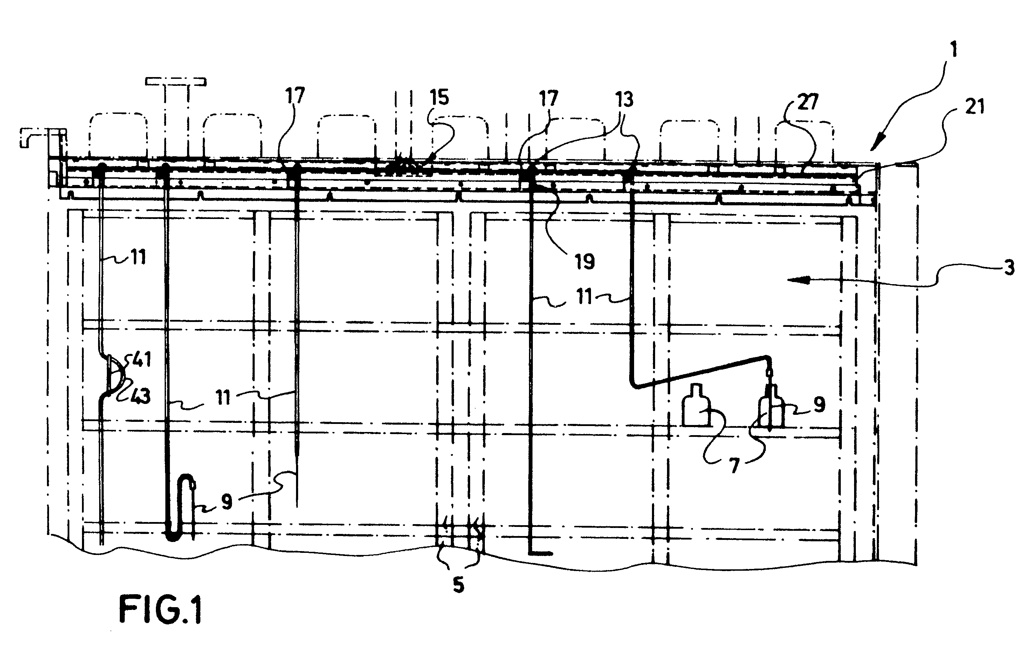

In Fig. 1 ist eine Vorrichtung, insbesondere beispielhaft eine Sterilisiervorrichtung 1, schematisch dargestellt, wobei der untere Bereich der Sterilisiervorrichtung 1 weggelassen wurde. Die Sterilisiervorrichtung weiste eine Sterilisierkammer 3 auf, die prinzipiell von üblicher Bauart sein kann. In die Sterilisierkammer 3 sind Gestelle 5 eingeführt, auf denen das zu sterilisierende Gut, beispielsweise Flaschen 7, angeordnet ist.

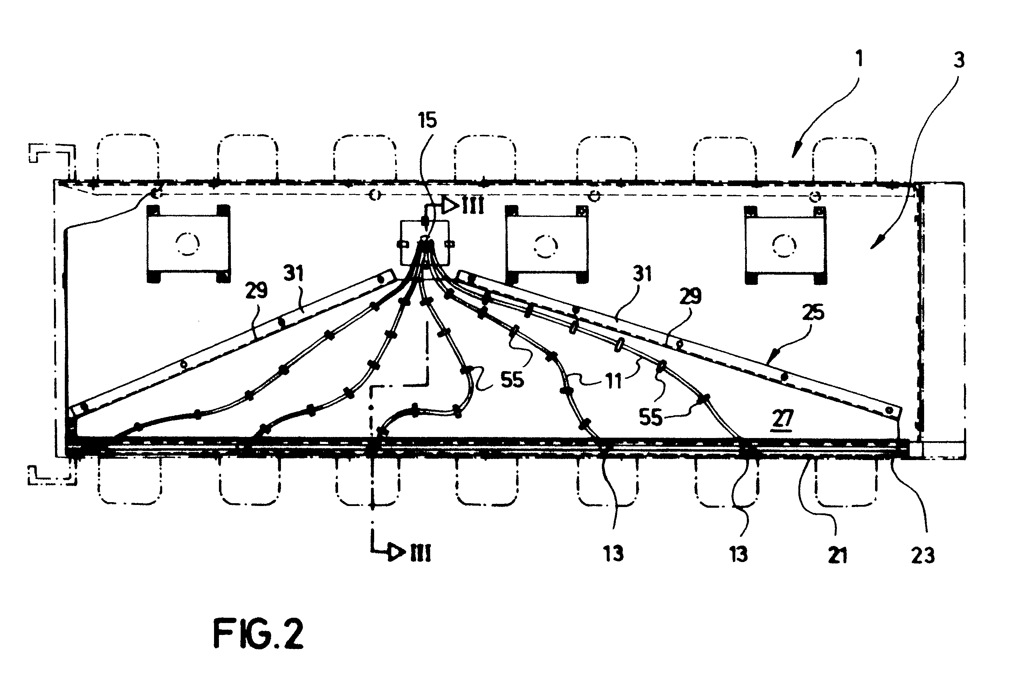

Wie deutlicher noch aus den Fig. 2, 3 und 5 ersichtlich, sind zur Prüfung des Sterilisierguts an Kabeln 11 befindliche Meßsonden 9 vorgesehen, die beispielsweise als Temperaturfühler ausgebildet sein können. Die Meßsonden 9 werden nach einem gewissen Verteilungsprinzip in das Sterilisiergut, beispielsweise in die Flaschen 7 eingeführt.

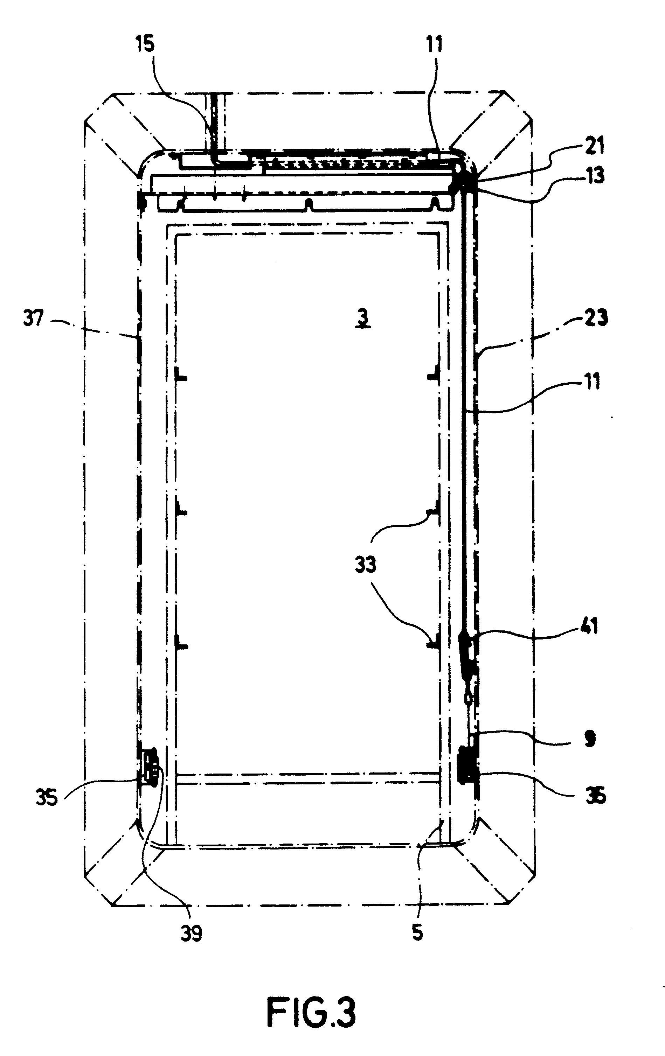

Die Meßsonden 9 sind zur Weiterleitung der Meßwerte mit den hierfür geeigneten Kabeln 11 verbunden, die ihrerseits mit der entsprechenden Meßstation verbunden sind. Die Kabel 11 sind an Führungselementen 13 festgelegt, von wo sie sich zu einem Herausführort 15 erstrecken. Der genaue Verlauf der Kabel 11 wird unter Bezugnahme auf Fig. 2 und 3 erläutert werden.

Die Führungselemente 13 sind mit Rollen oder Rädern 17 versehen und weisen einen Halteblock 19 auf, an dem das Kabel 11 in einer Öffnung 20 eingeklemmt ist.

Der Verlauf der Kabel 11 vom Herausführort 15 zu den jeweiligen Führungselementen 13, welche sich auf einer Schiene 21 bewegen, wird deutlich aus Fig. 2 sichtbar.

Vorteilhafterweise verläuft die Schiene entlang einer Seitenwand 23 der Sterilisierkammer 3. Die Schiene 21 verläuft, wie aus Fig. 1 ersichtlich, im wesentlichen horizontal. Die Kabel 11 werden vom Herausführort 15 über eine Stützebene 25, beispielsweise in Form eines Gleitblechs 27 geführt.

Das Gleitblech 27 überdeckt nicht die gesamte horizontale Ebene der Sterilisierkammer 3, sondern nur einen für die Führung bzw. das Stützen der Kabel 11 notwendigen Bereich. An den der Schiene 21 abgewandten Seitenrändern 29 sind Anschlagelemente 31 vorgesehen. Diese verlaufen im wesentlichen in vertikaler Richtung, so daß ein Herabfallen der Kabel 11 von der Stützebene 25 bzw. dem Gleitblech 27 verhindert wird.

In Fig. 3 ist eine Schnitansicht der Kammer 3 gemäß der Linie III - III von Fig. 2 dargestellt. Wie ersich tlich, weisen die Gestelle 5 mehrere Ebenen zum Lagern des Sterilisiergutes auf, wie das durch Aufnahmeschienen 33 verdeutlicht wird. Aus Gründen der übersichtlichkeit wurde jedoch das Sterilisiergut weiterhin nicht dargestellt.

In Fig. 3 ist eine Meßsonde 9 in Ruhestellung dargestellt, wobei sie mit max. Hängelänge vom Führungselement 13 entfernt angeordnet ist. Im unteren Bereich der Sterilisierkammer 3 sind U-förmige Aufnahmeelemente 35 vorgesehen, wobei die Öffnung des U sich in Richtung des Innern der Sterilisierkammer erstreckt. Die U-förmigen Aufnahmeelemente 35 sind als U-Profilschienen ausgebildet und erstrecken sich im wesentlichen über die gesamte Länge der Sterilisierkammer. Um zu verhindern, daß das Gestell 5, das beispielsweise fahrbar ist, gegen die Seitenwand 23 bzw. die weitere Seitenwand 37 der Sterilisierkammer stößt, sind diese U-förmigen Aufnahmeelemente 35 als Abweiser ausgebildet. Um weiterhin ein bei Anstoßen leichtes Weiterbewegen der Gestelle zu ermöglichen, weisen die U-förmigen Aufnahmeelemente 35 in regelmäßigen Abständen in horizontaler Richtung verteilte Rollen 39 auf, die über die Oberseite des U's vorstehen, so daß bei Anstoßen des Gestells 5 dieses anschließend durch die Rollen 39 daran weitergeführt wird.

In das Aufnahmeelement 35 unterhalb der Führungselemente 13 bzw. der Schiene 21 sind Öffnungen ausgebildet, die zur Aufnahme der Meßsonden 9 in deren Ruhestellung dienen.

Wie weiterhin aus Fig. 1 und Fig. 3 ersichtlich, können bestimmte Kabel 11 durch einen Klemmbügel 41 geführt sein, der dem Kabel 11 eine Schlaufe 43 veränderlicher Größe verleiht. Dadurch kann erreicht werden, daß zu prüfendes Sterilisiergut, das diagonal gegenüber dem zugehörigen Führungselement 13 angeordnet ist, erreicht wird, wobei die Hänglänge des Kabels 11 dies nicht zulassen würde.

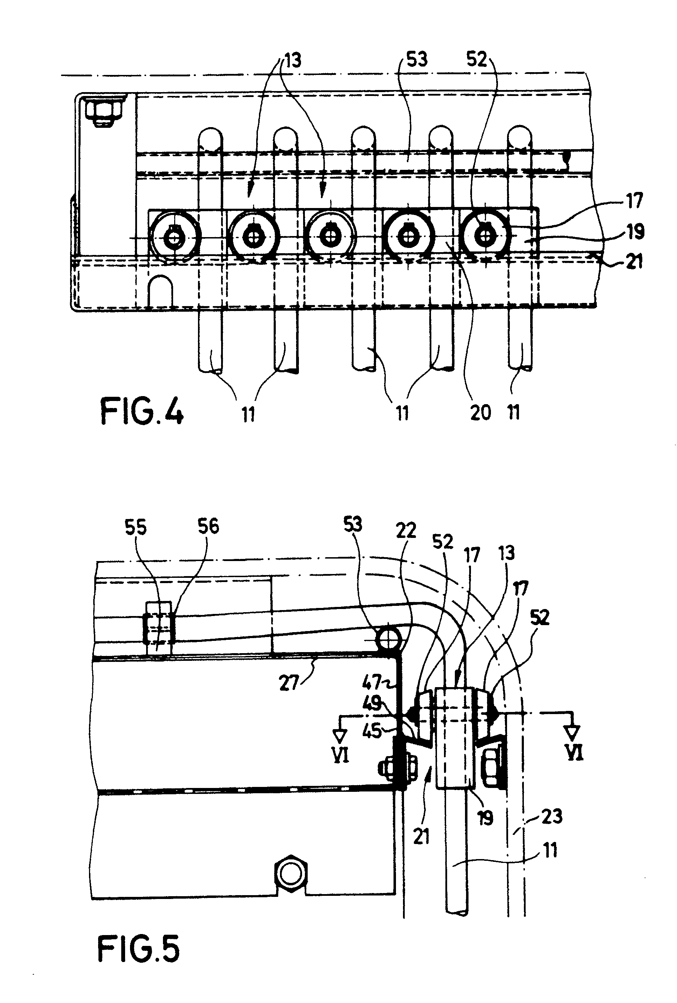

Fig. 4 zeigt eine Ruhestellung der Führungselemente 13 bzw. eine Vorbereitungsstellung, in der die Führungselemente aneinander geschoben sind. In dieser Stellung kann somit das vor der Sterilisierkammer 3 befindliche Sterilisiergut mit den Meßsonden 9 versehen werden. Wie ersichtlich, sind die Führungselemente so ausgebildet, daß die Halteblcke 10 in Anlage aneinander kommen können und sich dabei weder Kabel 11 noch Ränder 17 gegenseitig behindern.

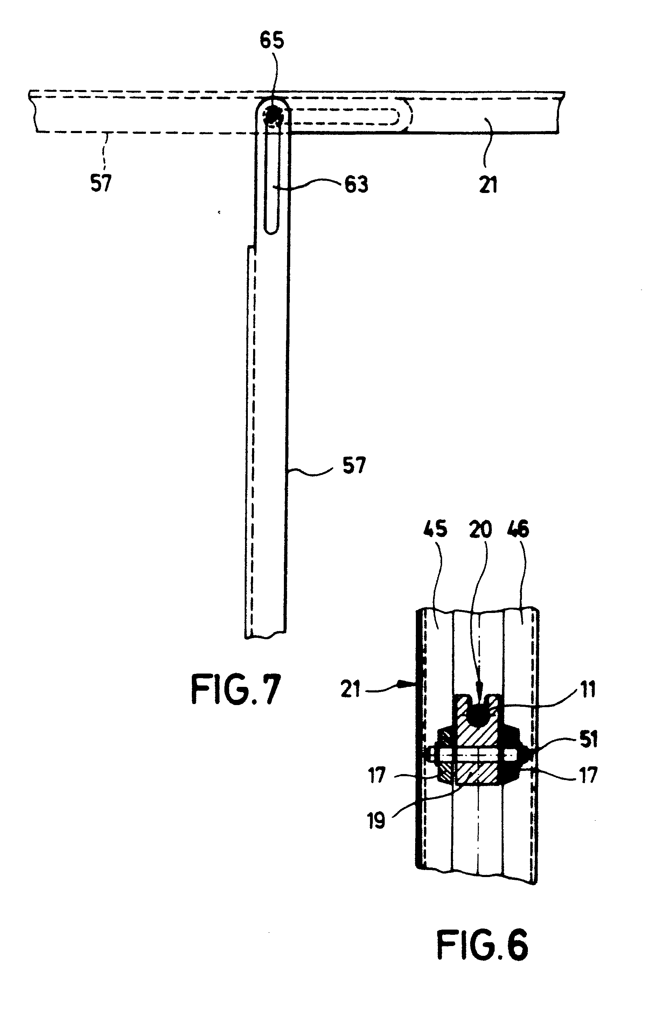

Fig. 5 zeigt in vergrößertem Maßstab das obere rechte Ende der Sterilisierkammer gemäß Fig. 3. Wie hier deutlich wird, ist die Schiene 21 aus zwei Seitenteilen 45 und 46 gebildet. Das in der Figur rechte Seitenteil 46 ist an der Seitenwand 23 angeschraubt, und das linke Seitenteil 45 ist an einem Stützblech 47 angeschraubt. Hierzu weisen die beiden Seitenteile vertikal verlaufende Seitenflächen auf. Weiterhin weist jedes Seitenteil eine Lauffläche 49 auf. Die Laufflächen 49 sind dabei zueinander nach unten geneigt angeordnet, und deren Neigung entspricht der Verjüngung der Räder 17 des Führungselements 13, so daß sich vorteilhafterweise eine Selbstzentrierung bzw. mittige Ausrichtung des Führungselements 13 ergibt. Zwischen den beiden Rädern 17 ist der Halteblock 19 angeordnet, der über eine Achse 51, vorzugsweise aus Edelstahl, mit den beiden Rädern 17 verbunden ist. Halteblock 19 und Räder 17 sind aus Polytetrafluorethylen gebildet, so daß sich eine besonders gute Gleitverbindung zwischen Edelstahl und Polytetrafluorethylen bildet, wodurch die Räder 17 entsprechend auf der Lauffläche 49 rollen können. Zur Sicherung der Räder 17 an der Achse 51 sind Federringe 52 vorgesehen.

Das Kabel 11 wird in dem Halteblock 19 in vertikaler Richtung nach unten geführt und weist an seinem Ende die Meßsonde 9 auf.

Weiterhin wird aus Fig. 5 der Verlauf des Kabels oberhalb des Führungselements 13 besonders deutlich. Dieses ist von einer vertikalen Richtung in eine im wesentlichen horizontale Richtung umschwenkbar, wobei es über ein Kabelstütz- und Umlenkelement 53 geführt wird. Wie in Zusammenhang aus den Fig. 4 und 5 ersichtlich, ist dieses Kabelstütz- und Umlenkelement 53 auf einfachste Weise aus einem Rohr gebildet, das sich parallel zur Schiene 21 erstreckt. Dies ermöglicht, daß nur eine punktförmige Auflagefläche zwischen Kabel 11 und Kabelstütz- und Umlenkelement 53 erfolgt, wodurch wiederum ein leichts Gleiten des Kabels 11 auf dem Kabelstütz- und Umlenkelement 53 und dadurch ein leichtes Bewegen des Führungselements 13 erreicht wird.

Das Kabel 11 wird weiterhin über das Gleitblech 27 geführt, wobei es durch Stützelemente 5 und 55 gestützt wird, so daß es nicht auf dem Gleitblech 27 aufliegt. Die Stützelemente 55 sind vorzugsweise als Polytetrafluorethylenblöcke ausgebildet, und sind über Spannhülsen 56 an dem Kabel 11 festgeklemmt. Wie aus Fig. 2 ersichtlich, sind die Stützelemente 55 im wesentlichen in regelmäßigen Abständen auf das jeweilige Kabel 11 aufgebracht. Somit können die Kabel leicht auf dem Gleitblech 27 gleiten.

Fig. 6 zeigt eine Schnittansicht des Führungselements gemäß der Schnittlinie VI-VI von Fig. 5. Hierbei wird weiterhin deutlich, wie das Kabel 11 in der Öffnung des Halteblocks 19 eingeklemmt ist und sich zwischen den beiden Seitenteilen 45 und 46 der Schiene 21 erstreckt.

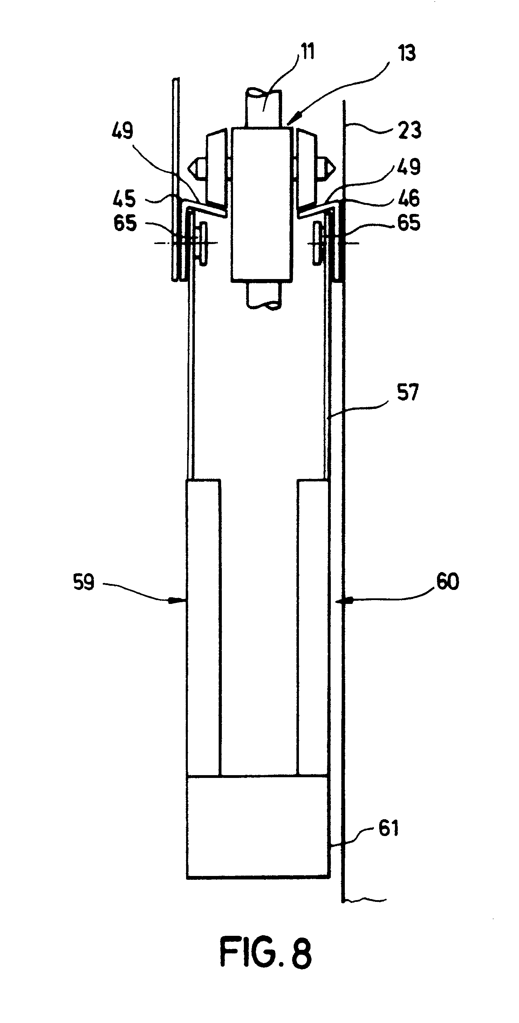

Zum schnelleren und einfacheren Einführen der Meßsonden 9 in das Sterilisiergut 7, das sich vor dem Sterilisieren vor der Öffnung der Sterilisierkammer befindet, ist vorteilhafterweise eine Schienenverlängerung 57 vorgesehen, wie aus den Fig. 7 und 8 ersichtlich. Die Schienenverlängerung 57 ist in Fig. 7 in eingeklapptem Zustand in ausgezogenen Linien dargestellt und in ausgeklapptem Zustand in gestrichelten Linien angedeutet.

Auf einfache Weise besteht die Schienenverlängerung 57 aus zwei Seitenteilen 59 und 60, ähnlich denen der Schiene 21. Die Seitenteile 59 und 60 sind an dem dem Anlenkende gegenüberliegenden Ende 61 miteinander verbunden. Im Bereich des Anlenkendes weisen die Seitenteile 59 und 60 ein Langloch 63 auf und weisen in dem Bereich des Langlochs keine Laufflächen für das Führungselement auf. Das Langloch wird von einem Bolzen 65 durchquert, der wiederum mit den Seitenteilen 45 bzw. 46 der Schiene 21 verbunden ist, wie aus Fig. 8 ersichtlich. Zum Ausklappen der Schienenverlängerung 57 wird diese nach oben gemäß der gestrichelten Stellung von Fig. 7 geklappt und dann in die Schiene 21 hineingeschoben. Da die Seitenteile 59 und 60 dadurch teilweise unter die geneigte Lauffläche 49 gelangen, wird so eine Lagesicherung der Schienenverlängerung 57 in der ausgeklappten Stellung erreicht.

Durch das Fehlen der Lauffläche im Bereich des Langlochs wird erreicht, daß ein ebener Übergang zwischen der Lauffläche der Schiene 21 und der Lauffläche der Schienenverlängerung 57 erreicht wird, so daß die Führungselemente 13 ohne Behinderung von der Schiene 21 auf die Schienenverlängerung 57 überrollen können und zurück.

Insgesamt wird durch die erfindingsgemäße Sterilisiervorrichtung eine einfache Möglichkeit geschaffen, das zu sterilisierende Gut mittels Meßsonden einfach, exakt und analog zum Sterilisiervorgang zu überprüfen. Insbesondere ergibt sich eine äußerst platzsparende Ausbildung, und die Kabel werden ohne Behinderung des Sterilisiergutes in die Sterilisierkammer geführt, so daß das Sterilisiergut jederzeit ohne Behinderung aus- und einfahrbar ist.

Im obenbeschriebenen Fall wird davon ausgegangen, daß sich das Sterilisiergut auf Gestellen befindet. Die Sterilisiervorrichtung kann jedoch auch ohne Gestelle betrieben werden, beispielsweise mit größeren Behältern, die eingeführt werden und loses Sterilisiergut enthalten können.

Beispielhaft wurde die erfindungsgemäße Vorrichtung anhand einer Sterilisiervorrichtung mit Sterilisierkammer dargestellt. Die Erfindung ist jedoch nicht auf diese Ausführungsform beschränkt. Insbesondere eignet sie sich für jede Anwendung zur Überwachung von Vorgängen in einer Kammer, wie beispielsweise beim Backen von Brot, Waschvorgängen, bei denen nur gewaschen und nicht sterilisiert wird, und dgl. Somit wird insgesamt eine einfache Vorrichtung geschaffen, die breitesten Anwendungen zugänglich ist.

**Patentansprüche**

1. Vorrichtung mit einer eine vertikale Öffung aufweisenden Kammer, in die mindestens ein das zu behandelnde Gut, insbesondere Flüssigkeit enthaltende Behälter, tragendes Gestell einbringbar ist, wobei in die Kammer wenigstens eine an einem Kabel angebrachte Meßsonde zum Einbringen in das zu behandelnde Gut eingeführt ist, und

   das Kabel im oberen Bereich der Kammer aus dieser herausgeführt ist, **dadurch gekennzeichnet**, daß das Kabel (11) im Inneren der Kammer (3) an einem Führungselement (13) angebracht ist, das seinerseits im wesentlichen in horizontaler Richtung entlang einer Seitenwand (23) bewegbar geführt ist.

2. Vorrichtung nach Anspruch 1, **dadurch gekennzeichnet**, daß das Führungselement (13) sich auf einer Schiene (21) bewegt.

3. Vorrichtung nach Anspruch 1 oder 2, dadurch gekennzeichnet, daß das Führungselement (13) auf der Schiene (21) gleitet.

4. Vorrichtung nach Anspruch 1 oder 2, **dadurch gekennzeichnet**, daß das Führungselement (13) auf der Schiene (21) rollt.

5. Vorrichtung nach Anspruch 4, **dadurch gekennzeichnet**, daß das Führungselement (13) aus einem Räderpaar (17) und einem das Kabel (11) fixierenden Halteblock (19) gebildet ist.

6. Vorrichtung nach Anspruch 5, **dadurch gekennzeichnet**, daß der Halteblock (19) eine Öffnung (20) aufweist, durch die das Kabel (11) geführt ist und in der es eingeklemmt ist.

7. Vorrichtung nach Anspruch 5 oder 6, **dadurch gekennzeichnet**, daß der Halteblock (19) aus Polytetrafluorethylen gebildet ist.

8. Vorrichtung nach einem der Ansprüche 5 bis 7, **dadurch gekennzeichnet**, daß das Räderpaar (17) ebenfalls aus Polytetrafluorethylen gebildet ist und deren Drehachse (51) aus Edelstahl gebildet ist.

9. Vorrichtung nach einem der Ansprüche 5 bis 8, **dadurch gekennzeichnet**, daß der Halteblock (19) zwischen dem Räderpaar bzw. den Rädern (17) angeordnet ist.

10. Vorrichtung nach einem der Ansprüche 6 bis 9, **dadurch gekennzeichnet**, daß das Kabel (11) im Halteblock (19) im wesentlichen vertikal verläuft und sich durch eine Längsöffnung der Schiene (21) bzw. zwischen zwei Seitenteilen (45,46) erstreckt.

11. Vorrichtung nach einem der Ansprüche 5 bis 10, **dadurch gekennzeichnet**, daß die Räder (17) eine sich nach außen verjüngende Rollfläche aufweisen und die Schiene (21) hierzu komplementäre Laufflächen (49) aufweist.

12. Vorrichtung nach einem der Ansprüche 1 bis 11, **dadurch gekennzeichnet**, daß das Kabel (11) zwischen dem Führungselement (13) und seinem Herausführort (15) gestützt ist.

13. Vorrichtung nach Anspruch 12, **dadurch gekennzeichnet**, daß das Kabel (11) an wenigstens einem bewegbaren Haltelement aufgehängt ist.

14. Vorrichtung nach Anspruch 12, **dadurch gekennzeichnet**, daß das Kabel (11) auf einer Stützebene (25), insbesondere in Form eines Gleitblechs (27) gestützt ist.

15. Vorrichtung nach Anspruch 13, **dadurch gekennzeichnet**, daß die Stützebene (25) im wesentlichen horizontal verläuft.

16. Vorrichtung nach Anspruch 14 oder 15, **dadurch gekennzeichnet**, daß Anschlagelemente (31) an der Stützebene (25) vorgesehen sind, die an den der Schiene (21) abgewandten Seitenrändern (29) der Stützebene (25) angeordnet sind.

17. Vorrichtung nach einem der Ansprüche 14 bis 16, **dadurch gekennzeichnet**, daß an den der Schiene (21) zugewandten Seitenrand (22) der Stützebene (25) ein Kabelstütz- und Umlenkelement (53) vorgesehen ist.

18. Vorrichtung nach Anspruch 17, **dadurch gekennzeichnet**, daß das Kabelstütz- und Umlenkelement (53) als zur Schiene (21) parallel verlaufendes Rohr ausgebildet ist.

19. Vorrichtung nach einem der Ansprüche 14 bis 18, **dadurch gekennzeichnet**, daß auf das Kabel (11) zwischen Ausführort (15) und Führungselement (13) weitere Stützelemente (55) aufgebracht sind.

20. Vorrichtung nach Anspruch 19, **dadurch gekennzeichnet**, daß die Stützelemente (55) aus Polytetrafluorethylenblöcken gebildet sind, die durch Spannhülsen (56) an dem Kabel (11) fixiert sind.

21. Vorrichtung nach Anspruch 19 oder 20, **dadurch gekennzeichnet**, daß die Stützelemente (55) in regelmäßigen Abständen angeordnet sind.

22. Vorrichtung nach einem der Ansprüche 1 bis 21, **dadurch gekennzeichnet**, daß in wenigstens einer der beiden Seitenwände (23) der Kammer (3), bevorzugt an beiden (23, 37), in deren unteren Bereich Aufnahmeelemente (35) zur Aufnahme der Meßsonde (9) vorgesehen sind.

23. Vorrichtung nach Anspruch 22, **dadurch gekennzeichnet**, daß die Aufnahmeelemente (35) weiterhin als Abweiser ausgebildet sind.

24. Vorrichtung nach Anspruch 22 oder 23, **dadurch gekennzeichnet**, daß Öffnungen in dem Aufnahmeelement (35) ausgebildet sind, in die die Meßsonden (9) in Ruhestellung eingesteckt sind.

25. Vorrichtung nach einem der Ansprüche 1 bis 24, **dadurch gekennzeichnet**, daß das Kabel (11) durch einen Klemmbügel (41) geführt ist, der dem Kabel (11) eine in seiner Größe veränderliche Schlaufe (43) verleiht.

26. Vorrichtung nach einem der Ansprüche 1 bis 25, **dadurch gekennzeichnet**, daß eine Schienenverlängerung (57) an dem der Einführöffnung der Kammer (3) benachbarten Schienenende vorgesehen ist.

27. Vorrichtung nach Anspruch 26, **dadurch gekennzeichnet**, daß die Schienenverlängerung (25) schwenkbar ausgebildet ist.

28. Vorrichtung nach Anspruch 27, **dadurch gekennzeichnet**, daß die schwenkbare Schienenverlängerung (57) sich in Ruhestellung im wesentlichen vertikal erstreckt.

29. Vorrichtung nach einem der Ansprüche 27 oder 28, **dadurch gekennzeichnet**, daß die Schienenverlängerung (57) aus zwei Seitenteilen (59,60) gebildet ist, deren dem Schwenkende zugewandten Endbereich ein Langloch (63) ausgebildet ist, durch das sich ein Bolzen (65) erstreckt, wobei der Bolzen (65) unterhalb der Lauffläche (49) der Schiene (21) in jeweils einem der Seitenteile (45,46) der Schiene (21) festgelegt ist.

30. Vorrichtung nach Anspruch 29, **dadurch gekennzeichnet**, daß die Schienenverlängerung (57) im Bereich des Langlochs (63) keine Lauffläche aufweist.

31. Vorrichtung nach Anspruch 29 oder 30, **dadurch gekennzeichnet**, daß die beiden Schienenteile (59,60) an dem dem Langloch (63) gegenüberliegenden Ende (61) miteinander verbunden sind.

32. Vorrichtung nach Anspruch 26, **dadurch gekennzeichnet**, daß die Schienenverlängerung teleskopartig ausgebildet ist.

FIG.1

EP 0 443 336 A1

FIG.2

EP 0 443 336 A1

FIG.3

FIG.4

FIG.5

65

57

63

21

57

**FIG.7**

45   20   46

21

11

51

17         17

19

**FIG.6**

FIG.8

# EUROPÄISCHER RECHERCHENBERICHT

Europäisches Patentamt

Nummer der Anmeldung

EP 91 10 0841

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| | Keine Entgegenhaltungen. ----- | | A 61 L 2/24 <br> G 01 K 1/14 |
| | | | **RECHERCHIERTE SACHGEBIETE (Int. Cl.5)** <br><br> A 61 L <br> G 01 K <br> A 21 B |

Der vorliegende Recherchenbericht wurde für alle Patentansprüche erstellt

| Recherchenort | Abschlußdatum der Recherche | Prüfer |
|---|---|---|
| DEN HAAG | 04-06-1991 | VAN BOGAERT J.A.M.M. |

KATEGORIE DER GENANNTEN DOKUMENTE

X : von besonderer Bedeutung allein betrachtet
Y : von besonderer Bedeutung in Verbindung mit einer anderen Veroffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.......................................................................
& : Mitglied der gleichen Patentfamilie, übereinstimmendes Dokument

EPO FORM 1503 03.82 (P0403)